Europäisches Patentamt

European Patent Office

Office européen des brevets

(11) Publication number: **0 090 536**
**B1**

## (12) EUROPEAN PATENT SPECIFICATION

(45) Date of publication of patent specification: **07.05.86**

(21) Application number: **83301377.4**

(22) Date of filing: **14.03.83**

(51) Int. Cl.⁴: **B 60 T 13/52**

(54) Vacuum operated brake booster.

(30) Priority: **27.03.82 GB 8209091**

(43) Date of publication of application:
**05.10.83 Bulletin 83/40**

(45) Publication of the grant of the patent:
**07.05.86 Bulletin 86/19**

(84) Designated Contracting States:
**DE FR IT**

(56) References cited:
**FR-A-2 476 574**
**GB-A-2 044 376**
**GB-A-2 070 171**
**GB-A-2 082 704**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Bailey, Walter William
5 Erica Drive Whitnash
Leamington Spa Warwickshire (GB)**

(74) Representative: **Farrow, Robert Michael
Patent Department Automotive Products plc
Tachbrook Road
Leamington Spa Warwickshire CV31 3ER (GB)**

## Description

This invention relates to brake boosters and is particularly though not exclusively concerned with direct acting brake boosters for use in motor vehicle braking systems.

Brake boosters usually comprise two annular dished pressings joined together at their outer rims to form a hollow casing. The casing is divided into two chambers by a movable wall and contains valve means arranged to provide a controlled differential pressure across the wall to provide boost thrust and thus an output load greater than the input load.

A so-called direct acting brake booster is one which is placed between a driver's brake pedal and a hydraulic master cylinder. Installation requirements dictate that, in almost all cases, one end of the booster is mounted against the engine side of the vehicle bulkhead and a hydraulic master cylinder is mounted on the other end of the booster and that consequently reaction load is transmitted by the booster which loads the booster casing in tension.

The booster casing is also loaded in bending as a cantilever by the weight of the master cylinder and this load fluctuates with vertical vehicle accelerations. A conventional booster casing has to be sufficiently rigid to avoid significant deformation under these loads and must not be susceptible to fatigue failure. The booster attachment points to the vehicle bulkhead can be spaced out to reduce local loads resulting from the bending moment but the mountings of the master cylinder tend to be dictated by industry standards and the weight disadvantage of an excessively large master cylinder flange.

It has already been proposed, for example in U.K. Patent specfication GB—A—2070171 (representing the preamble of claim 1) to provide a tie bar arrangement for transmitting reaction loads from the output region to the input region of the booster, e.g. in the form of two mounting bolts which extend from the master cylinder round the booster casing to mounting points on the bulkhead. To keep the booster assembly compact and to keep the bolts in line with master cylinder mounting points, the bolts are arranged in a narrowed portion of the booster casing which thus has to depart from the conventional circular configuration. This introduces a new difficulty in that the movable wall which corresponds in shape to the casing has individual lobes joined to a central portion and these lobes can be subject to undesirable flexing with respect to or breaking from the central portion.

An object of the present invention is to provide a booster which utilises the advantages of a support structure for the master cylinder without introducing the structural disadvantage associated with the movable wall.

According to the invention there is provided a brake booster comprising a casing having an input end and an output end and divided into two chambers by a movable wall, valve means responsive to a booster input load for providing a controlled differential pressure across said wall to provide boost thrust and thus an output load greater than the input load, the output end of the casing being dished so that the casing is longer near its longitudinal axis than its outer periphery, and at least one tie bar for transmitting reaction loads from the output region to the input region of the booster accommodated in a re-entrant portion of the booster periphery characterised in that the movable wall incorporates a stiffening flange around its periphery and the flange is deeper in the region of the re-entrant portion of the booster periphery than at the outermost parts of the wall, the deeper part of the flange fitting into the longer, dished, part of the casing as the movable wall approaches the dished end.

Preferably the wall is sealed to the periphery of the casing by a rolling diaphragm and the flange forms a support for the diaphragm.

Preferably the brake booster incorporates at least two tie bars. Two symmetrically placed tie bars can provide a symmetrical balanced structure but in themselves provide little resistance to bending. In order to provide a structure which is resistant to bending, three tie bars can be advantageous.

Other features of the invention are included in the following description of a preferred embodiment shown by way of example only, in the accompanying drawings in which:—

Figure 1 is a diagrammatic illustration of the installation of a booster according to the invention, also showing other parts of a brake actuation system;

Figure 2 is a plan view of the booster; and

Figure 3 is an axial section through the booster on the line E—E of Figure 2.

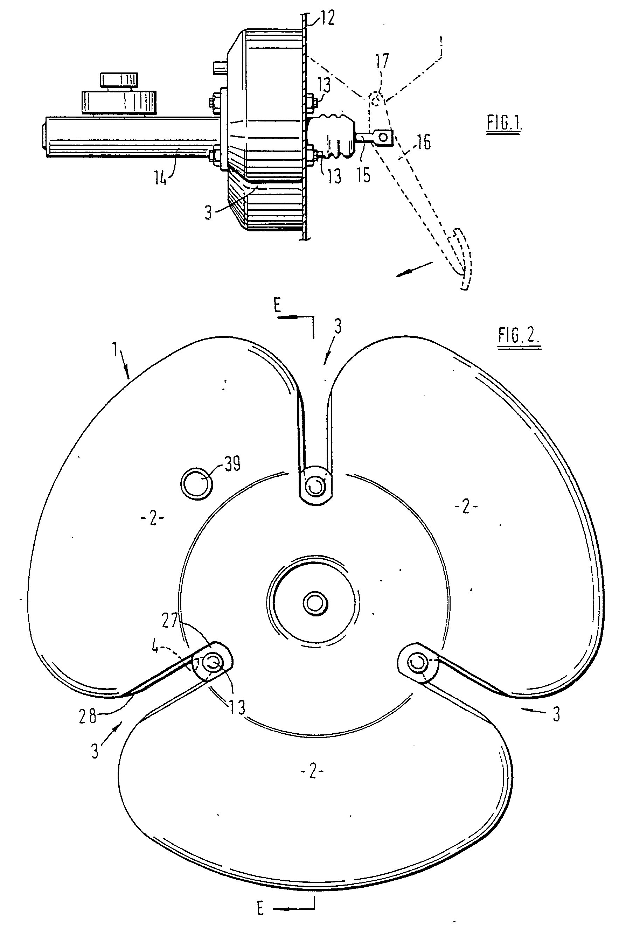

Figure 1 shows a brake booster 11 mounted by the input end of its casing 1 on a vehicle bulkhead 12 and fixed thereto by tie bars 13 extending parallel to the longitudinal axis of the casing from the bulkhead to a hydraulic brake master cylinder 14. A booster pushrod 15 at the input end of the booster is connected to a brake pedal 16 pivoted to the vehicle structure by a pin 17.

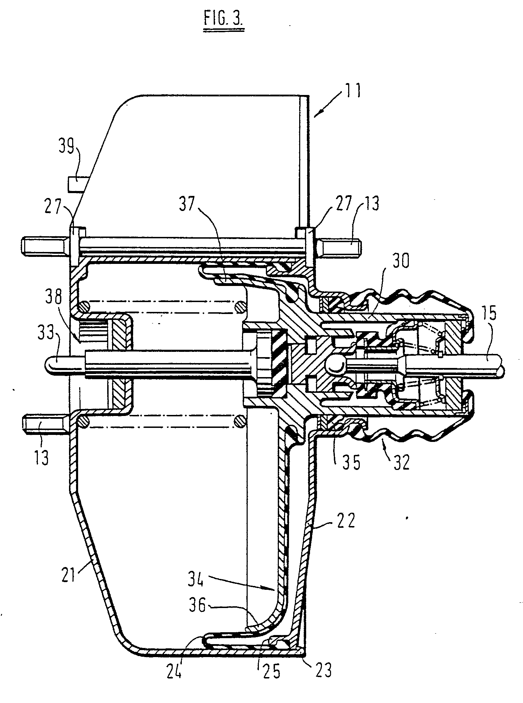

Figure 2 shows that the booster casing 1 is generally cloverleaf shape with three lobes 2 separated by re-entrant portions or recesses 3. Figure 3 shows that casing 1 comprises a generally cloverleaf bowl shaped plastics moulding 21 closed by a generally plate shaped moulding 22. Integral hooks 23 on the outer periphery of the bowl moulding 21 engage the outer edge of the plate moulding to retain it therewith. The outer edge of the plate moulding 22 also has portions, not shown, which abut the peripheral edge of the bowl moulding 21 to limit insertion of moulding 22 therein.

A peripheral bead of a rolling booster diaphragm 24 is trapped in a groove formed by an 'L' shaped flange 25 at the outer edge of the plate moulding by the wall of the bowl moulding. Such a flange 25 is made possible by the adoption of a plastics moulding for the casing construction.

Three tie bars 13, threaded are both ends have shoulders 27 to both assist retention of the mouldings 21 and 22 together and to prevent the booster casing being crushed by over-tightening of nuts on the studs. The tie bar are housed in the re-entrant portions 3 of the booster periphery. The mouldings 21 and 22 have projections 4 so that the tie bars snap into grooves formed behind the projections at the base of the re-entrant portions as shown.

During assembly the shoulders 27 slide in moulded grooves 28 of the booster casing, and flats on shoulders subsequently prevent the tie bars from turning as the securing nuts are tightened.

The booster includes the usual input rod 15 (also shown in Figure 1) and output rod 33 which applies a boosted output load to the master cylinder 14 shown in Figure 1. A valve assembly 32 incorporates a valve body 30 which is formed as an integral plastics moulding with a movable wall 34. The movable wall 34 is guided for axial movement by the valve body 30 sliding through a seal 35 supported in a central aperture in plate 22. The movable wall or diaphragm support plate 34 is sealed against the periphery of the casing by the previously described rolling diaphragm 24. To facilitate the rolling action of the diaphragm 24 and to stiffen the support plate 34, it is provided in the usual way with a flange 36 which merges through a smooth curve with the main part of the support plate.

Although not shown, it can be appreciated that the diaphragm support plate 34 must conform to the generally cloverleaf shape of the casing as shown in Figure 2. Thus the diaphragm support plate incorporates three lobes which are joined to a central core, that is the valve body by comparatively narrow parts. The axial thrust load on the individual lobes tends to bend these lobes or even to break them off at this narrow point. In order to provide a sufficiently stiff and strong structure, the flange 36 has deeper portions 37 in the region of the re-entrant portions 3 of the casing. It is desirable that the whole of the flange 36 should not be increased in size in this way or in other words that the flange should be deeper in the region of the re-entrant portions than at the outermost parts of the diaphragm support plate for a reason which will be explained subsequently.

Even for the limited loads carried by the casing, it is desirable in the interests of stiffness to avoid a flat end wall for the moulding 21. Partly for this reason, this end wall constituting the output end of the casing has a generally conical, dished, portion so that the casing is longer near its centre than it is at its outer periphery. With this arrangement, the deeper part 37 of the flange 36 moves in the longer part of the casing while the shallower part of the flange 36 moves in the shorter part of the casing with the result that travel of the diaphragm support plate is not restricted by the enlarged flange. It is for this reason that outer parts of the flange should not be enlarged. The generally conical end to moulding 21 can also tend to prevent interference between the forward output end of the casing and another component of a vehicle and assists fitting the booster in a confined space. A recess 38 in the moulding 21 which receives the rear end of a master cylinder also assists in general compactness.

The valve 32 is entirely conventional and a detailed explanation of its operation is not relevant to the present invention. It can simply be stated that in the absence of any input load, pressure reduced below atmospheric (hereinafter referred to as vacuum) applied to the forward side of the diaphragm 24 through vacuum connection 39 is also applied to the rear side of the diaphragm. When load is applied to the input rod 15, the valve closes communication between the two sides of the diaphragm and subsequently allows controlled access of air from the atmosphere to the rear of the diaphragm to produce a controlled differential pressure between the two sides of the diaphragm and thus generate a boost thrust. This boost thrust together with the input load itself are applied to the output rod 33 to produce a boosted output load.

The re-entrant portions 3 should be so shaped that they reduce the effective area of the movable wall by a minimum amount, subject only to providing a curved shape to permit effective rolling of the diaphragm 24. Despite this, a small part of the effective area must be lost as compared with a conventional circular shape. To provide equivalent boost thrust to that of a circular casing, the diameter of the cloverleaf booster has to be increased. The increase can be small but in itself it is something of a disadvantage. However, a conventional booster casing which has to carry greater mechanical loads than the casing shown in the drawings is normally made from two dished steel pressings which at their junction incorporate outwardly directed flanges. Because with the present invention, a casing of plastics material can be employed, the outwardly directed flange becomes unnecessary and there is a compensating gain in compactness with the present invention which tends to compensate for the increased internal diameter required with the present invention and in some cases can more than compensate for this increase.

In use of the booster in an installation as shown in Figure 1, the output load applied to the master cylinder is reacted at the mountings of the master cylinder on the tie bars. Part of this reaction load, equivalent to the input load, is transmitted directly through the tie bars to the mountings on the vehicle bulkhead 12. There are also internal loads within the casing generated by the differential pressure on both sides of the movable wall and the corresponding thrusts on the end faces of the booster. However, the full load applied to the master cylinder is not transmitted through the casing and loads associated with the weight and vertical acceleration of the master cylinder are in general transmitted through the tie bars to the bulkhead.

## Claims

1. A brake booster comprising a casing (1) having an input end (22) and an output end (21) and divided into two chambers by a movable wall (34), valve means (32) responsive to a booster in load for providing a controlled differential pressure across said movable wall to provide boost thrust and thus an output load greater than the input load, the output end (21) of the casing (1) being dished so that the casing is longer near its longitudinal axis than its outer periphery, and at least one tie bar (13) for transmitting reaction loads from the output region to the input region of the booster accommodated in a re-entrant portion (3) of the booster periphery, the movable wall (34) incorporating a stiffening flange (36, 37) around its periphery, characterised in that the flange (36, 37) is deeper in the region of the re-entrant portion (3) of the booster periphery than at the outermost parts of the movable wall, the deeper part (37) of the flange (36, 37) fitting into the longer, dished, part of the casing as the movable wall approaches the dished end.

2. A brake booster as claimed in claim 1 characterised in that the movable wall is sealed to the periphery of the casing by a rolling diaphragm (24) and the flange (36) forms a support for the diaphragm.

3. A brake booster as claimed in claim 1 or claim 2, characterised in that there are at least two re-entrant portions (3) and at least two corresponding tie bars (13) within the re-entrant portions.

4. A brake booster as claimed in claim 3, having three re-entrant portions (3) and three tie bars (13), one within each re-entrant portion.

5. A brake booster as claimed in any preceding claim characterised in that the tie bars (13) have shoulders (27) to assist holding together two parts (21 and 22) of the casing and to prevent crushing of the casing by excessive tightening.

## Patentansprüche

1. Servobremsgerät mit einem Gehäuse (1), das ein Eingabeende (22) und ein Ausgabeende (21) hat und durch eine bewegliche Wand (34) in zwei Kammern unterteilt ist, einer auf eine Verstärkereingabekraft ansprechenden Ventileinrichtung (32) zum Schaffen eines gesteuerten Differenzdruckes über die bewegliche Wand hinweg, um einen Verstärkungsschub und somit eine Ausgabekraft, die größer als die Eingabekraft ist, zu liefern, wobei das Ausgabeende (21) des Gehäuses (1) gekümpelt ist, so daß das Gehäuse in der Nähe seiner Längsachse länger als an seinem äußeren Rand ist, und mindestens einer Verbindungsstange (13) zum Weiterleiten von Reaktionskräften vom Ausgabebereich zum Eingabebereich des Servobremsgerätes, die in einem einspringenden Abschnitt (3) des Servobremsgeräterandes untergebracht ist, wobei die bewegliche Wand (34) einen Versteifungsflansch (36, 37) um ihren Rand herum hat, dadurch gekennzeichnet, daß der Flansch (36, 37) im Bereich des einspringenden Abschnittes (3) des Servobremsgeräterandes tiefer als an den äußersten Teilen der beweglichen Wand ist, wobei der tiefere Teil (37) des Flansches (36, 37) in den längeren, gekümpelten Teil des Gehäuses paßt, wenn sich die bewegliche Wand dem gekümpelten Ende nähert.

2. Servobremsgerät nach Anspruch 1, dadurch gekennzeichnet, daß die bewegliche Wand durch eine Rollmembran (24) gegen den Rand des Gehäuses abgedichtet ist und der Flansch (36) eine Abstützung für die Membran bildet.

3. Servobremsgerät nach Anspruch 1 oder Anspruch 2, dadurch gekennzeichnet, daß mindestens zwei einspringende Abschnitte (3) und mindestens zwei entsprechende Verbindungsstangen (13) innerhalb der einspringenden Abschnitte vorgesehen sind.

4. Servobremsgerät nach Anspruch 3, gekennzeichnet durch drei einspringende Abschnitte (3) und drei Verbindungsstangen (13), wobei in jedem einspringenden Abschnitt jeweils eine ist.

5. Servobremsgerät nach irgendeinem vorhergehenden Anspruch, dadurch gekennzeichnet, daß die Verbindungsstangen (13) Schultern (27) haben, um beim Zusammenhalten von zweil Teilen (21 and 22) des Gehäuses mitzuhelfen und das Zusammendrücken des Gehäuses durch übermäßiges Anziehen zu verhindern.

## Revendications

1. Dispositif d'assistance pour frein comprenant un carter (1) présentant une extrémité d'entrée (22) et une extrémité de sortie (21) et divisé en deux chambres par une cloison mobile (34), des moyens formant soupape (32) répondant à un effort d'entrée du dispositif d'assistance en fournissant une pression différentielle commandée d'un côté à l'autre de ladite cloison mobile afin de fournir une poussée renforcée et donc un effort de sortie supérieur à l'effort d'entrée, l'extrémité de sortie (21) du carter (1) étant en forme de cuvette de façon que le carter soit plus long au voisinage de son axe longitudinal que sa périphérie extérieure, et au moins un tirant (13) servant à transmettre des efforts de réaction de la région de sortie à la région d'entrée du dispositif d'assistance et logé dans une partie rentrante (3) de la périphérie du dispositif d'assistance, la cloison mobile (34) comprenant une collerette de raidissement (36, 37) autour de sa périphérie, caractérisé en ce que la collerette (36, 37) est plus profonde dans la région de la partie rentrante (3) de la périphérie du dispositif d'assistance qu'aux parties les plus extérieures de la cloison mobile, la partie plus profonde (37) de la collerette (36. 37) s'engageant dans la partie plus longue, en forme de cuvette, du carter lorsque la cloison mobile se rapproche de l'extrémité en cuvette.

2. Dispositif d'assistance tel que revendiqué dans la revendication 1, caractérisé em ce que la cloison mobile est rendue étanche à la périphérie du carter à l'aide d'une membrane retournable (24) et la collerette (36) constitue un support pour la membrane.

3. Dispositif d'assistance tel que revendiqué dans la revendication 1 ou la revendication 2, caractérisé en ce qu'il existe au moins deux parties rentrantes (3) et au moins deux tirants correspondants (13) situés à l'intérieur des parties rentrantes.

4. Dispositif d'assistance tel que revendiqué dans la revendication 3, présentant trois parties rentrantes (3) et trois tirants (13), à raison d'un à l'intérieur de chaque partie rentrante.

5. Dispositif d'assistance tel que revendiqué dans une revendication précédente quelconque, caractérisé en ce que les tirants (13) présentent des épaulements (27) pour participer au maintien à l'état assemblé des deux parties (21 et 22) du carter et pour empêcher un écrasement du carter du fait d'un serrage excessif.

0 090 536

FIG.1.

FIG.2.

FIG. 3.